# FASCICULE DE BREVET EUROPEEN

(11) **EP 2 173 162 B1**
(45) Date de publication et mention de la délivrance du brevet: **05.09.2018**
(21) Numéro de dépôt: 08762890.5
(22) Date de dépôt: 13.06.2008
(51) Int. Cl.: A01N 25/04, A01N 25/28, A01N 53/00, A01N 59/20, A01P 7/04, A01P 7/02, A01P 3/00

(54) **PROCEDE DE FORMULATION DE PRINCIPES ACTIFS AGROCHIMIQUES POUR REGULER LEUR CINETIQUE DE LIBERATION, LES PROTEGER DES AGRESSIONS EXTERIEURS ET SECURISER LEURS UTILISATEURS**
VERFAHREN ZUR FORMULIERUNG VON AGRARCHEMISCHEN WIRKSTOFFEN ZUR STEUERUNG IHRER FREISETZUNGSKINETIK, ZU IHREM SCHUTZ GEGEN EXTERNE FAKTOREN UND ZUM SCHUTZ IHRER ANWENDER
PROCESS FOR FORMULATING AGROCHEMICAL ACTIVE PRINCIPLES FOR CONTROLLING THEIR RELEASE KINETICS, PROTECTING THEM FROM EXTERNAL ATTACKS AND KEEPING THEIR USERS SAFE

(30) Priorité: 12.07.2007 FR 0705045
(43) Date de publication de la demande: 14.04.2010
(73) Titulaire: COATEX, 69730 Genay (FR)
(72) Inventeur: GUERRET, Olivier, F-69890 La Tour De Salvagny (FR); SUAU, Jean-Marc, F-69480 Lucenay (FR); KENSICHER, Yves, F-69620 Theize (FR)
(74) Mandataire: Regimbeau
(86) Numéro de dépôt international: PCT/IB2008/001564
(87) Numéro de publication internationale: WO 2009/007810

(56) Documents cités:
- EP-A- 0 875 557
- EP-A- 1 655 351
- WO-A-99/65958
- US-A- 5 292 843
- DATABASE WPI Week 200580 Thomson Scientific, London, GB; AN 2005-773506 XP002466229 & JP 2005 298474 A (KOSE KK) 27 octobre 2005 (2005-10-27)

## Description

### Résumé de l'invention :

L'invention concerne une nouvelle méthode pour formuler des principes actifs agrochimiques hydrophobes de manière à sécuriser les personnes qui les manipulent, à protéger ces principes des agressions extérieures, et à réguler leur cinétique de libération. Elle offre aussi la possibilité de formuler ces principes actifs sous deux modes de présentation qui intéressent particulièrement l'homme du métier : celle d'un liquide (dispersion aqueuse) pulvérisable ou d'un solide (granulé) épandable. Elle permet enfin de satisfaire à l'ensemble des exigences précitées, quel que soit le principe actif agrochimique considéré : il s'agit en ce sens d'une méthode "universelle".

L'invention repose sur l'utilisation d'émulsions acryliques et hydrosolubles à pH supérieur à 5, contenant des groupements hydrophobes. Ces émulsions permettent de piéger par encapsulation des principes actifs agrochimiques dans le but de favoriser leur protection vis-à-vis de l'environnement. Ainsi formulé, le principe actif sera non seulement protégé des agressions extérieures, mais l'utilisateur sera aussi prémuni contre les possibles effets néfastes dudit principe actif. De plus, le principe actif ainsi piégé aura une action prolongée, puisqu'il sera relargué sur des périodes plus longues.

En outre, l'invention permet de formuler des principes actifs à travers les 2 présentations "classiques" mises en oeuvre par l'utilisateur final : sous forme d'un liquide qui est pulvérisé, ou sous forme d'un solide qui est destiné à être épandu, ces 2 formes pouvant aussi être injectées directement dans le sol. Enfin, la bibliothèque de groupements hydrophobes mise à la disposition du formulateur est d'une telle richesse, que l'homme du métier sera en mesure d'encapsuler n'importe quel principe actif agrochimique hydrophobe à travers le choix judicieux du groupement hydrophobe présent dans l'émulsion acrylique selon l'invention.

### Définitions préalables :

Principe actif agrochimique : dans le contexte de cette invention, nous désignons par cette expression toute substance ayant une activité sur les sols, la faune ou la flore, ce qui pourra désigner à titre non limitatif une molécule ayant un effet herbicide, pesticide, fongicide, un engrais, un défoliant. Pour une meilleure compréhension, on pourra utiliser dans la Demande l'expression écourtée de "principe actif', en vue de désigner le "principe actif agrochimique".

HASE : acronyme anglo-saxon pour Hydrophobically Alkali Swellable Emulsion. Ce terme désigne des épaississants acryliques à base d'acide (méth)acrylique, d'un ester de ces acides et d'un monomère comportant au moins un motif hydrophobe.

### Problème technique et art antérieur

Protéger les principes actifs agrochimiques, tant au niveau de la formulation initiale qui les contient (comme un engrais, un pesticide, un herbicide, etc...) qu'au niveau des surfaces sur lesquelles ils sont destinés à être appliqués (comme un sol, un arbre, une plante, etc...) est un enjeu majeur pour l'homme du métier.

Les principes actifs doivent d'abord être protégés au sein de la formulation dont ils font partie. En effet, ces principes actifs peuvent s'avérer chimiquement instables et vulnérables à des agressions extérieures telles que les oxydations, comme indiqué dans le document "Dégradation catalytique de carbamates herbicides déposés sur bentonites homoïoniques - IV - Cas du carbetamide" (Weed Research 26 (5), octobre 1986, pp. 315-324). De plus, certains principes actifs sont dangereux pour l'utilisateur : ainsi, l'EPTC (di-N-propylthiocarbamate d'éthyle), molécule ayant une activité herbicide, émet des gaz nocifs à base d'oxydes d'azote et de soufre lorsqu'il se décompose, et est considéré comme toxique lorsqu'il est absorbé par la peau, les voies respiratoires ou digestives.

Ces principes actifs doivent aussi avoir une action prolongée dans le temps, afin d'éviter leur surdosage dans les formulations (ce qui amplifie les risques d'exposition de l'utilisateur) et / ou la multiplication des actions d'épandage ou de pulvérisation (coûteuses en temps et en matériels). De plus, en temps ordinaire, l'homme du métier a tendance à surdoser le principe actif, afin de compenser les pertes inévitables liées aux dégradations de ce dernier. Protéger un principe actif agrochimique, en vue de prolonger son efficacité dans le temps, permet de réduire la quantité dudit principe mis en oeuvre, ce qui constitue un enjeu majeur pour l'homme du métier.

Il est aussi nécessaire de proposer une technique de formulation des principes actifs hydrophobes, aussi bien à l'état de liquide que de solide, puisque ce sont les deux formes privilégiées par l'utilisateur final : maintenir ce degré de souplesse au niveau du choix de la technique de mise en oeuvre du produit (pulvérisation, épandage ou encore injection dans les sols) fait donc partie intégrante du cahier des charges de la Demanderesse.

Enfin, apporter un procédé permettant de protéger un principe actif agrochimique hydrophobe et ce, quelle que soit la molécule hydrophobe considérée, constituerait un progrès technique certain, tant l'homme du métier doit faire face à des molécules de nature et de structure différentes. Pour s'en convaincre, il suffit d'examiner le nombre et la diversité des molécules ayant une activité dans le seul domaine herbicide, où on distingue :
- les herbicides minéraux (tels que la cyanamide calcique, le sulfate de fer et le chlorate de sodium) ;
- les herbicides organiques :
   - agissant par pénétration racinaire (les dinitroanilines, les urées substituées, les triazines),
   - agissant par pénétration foliaire (les phytohormones de synthèse, les colorants nitrés dérivés du phénol et du dinitrophénol, les carbamates, les ammonium quaternaires à base de pyridiles et les produits de la famille des glyphosates tel que le Roundup™),
   - agissant par pénétration racinaire et foliaire (les imidazolinones, les dyphényls-éthers).

Aussi, on a cherché depuis de nombreuses années à encapsuler les principes actifs agrochimiques, en vue de répondre à l'ensemble des contraintes précédemment évoquées. On connaît à ce jour 4 grandes techniques d'encapsulation de principes actifs : la fabrication de granulés en présence de substrats, les techniques d'encapsulation qui mettent en oeuvre des β-cyclodextrines, des émulsions silicones et des polymères organiques.

La première catégorie concerne donc les procédés de fabrication de granulés contenant un principe actif agrochimique, ledit principe étant enrobé, cobroyé ou adsorbé sur un substrat minéral ou organique, facilement épandable. A titre d'exemple, le document JP 92 35203 décrit un procédé de fabrication d'une poudre mouillable contenant au moins un principe actif agrochimique fixé sur un substrat à base de terre de diatomées, de carbonate de calcium ou de cellulose.

La deuxième catégorie est constituée par les procédés d'encapsulation. Parmi eux, on distingue les procédés qui mettent en oeuvre les β-cyclodextrines qui sont des molécules "hôtes" naturelles obtenues par dégradation enzymatique de l'amidon. Elles se présentent sous forme d'oligomères cycliques du glucose et sont caractérisées par la présence d'une cavité qui leur permet "d'accueillir une molécule hôte", de manière à former un complexe d'inclusion : selon ce mécanisme, elles peuvent encapsuler des principes actifs agrochimiques, comme décrit dans le document FR 2 677 366. Toutefois, les complexes à base de β-cyclodextrines et d'un principe actif doivent subir une étape supplémentaire d'enrobage à partir d'un matériau protecteur (un latex qui va sécher et se solidifier dans le cas du document précité), de manière à constituer une paroi permettant la libération progressive du principe actif. De plus, la stabilité du complexe d'inclusion formé dépend avant tout de l'affinité de la cyclodextrine avec le principe à encapsuler : de nombreux principes actifs ne peuvent pas être encapsulés par des β-cyclodextrines.

Une deuxième méthode consiste à encapsuler un principe actif agrochimique au moyen d'émulsions silicones dans de l'eau : la perméabilité élevée des silicones leur permet de libérer lentement les molécules de principes actifs. Ainsi, le document WO 2001 / 024631 décrit-il la fabrication par cette méthode de microcapsules utilisées dans l'agrochimie : elles présentent une résistance mécanique améliorée ce qui renforce la protection du principe actif, et elles permettent un relargage progressif du principe actif ce qui conduit à une efficacité prolongée. Une telle méthode repose néanmoins sur la solubilité ou la compatibilité du principe actif à encapsuler avec l'émulsion silicone utilisée, ce qui ne permet pas d'encapsuler tous les principes actifs agrochimiques.

Enfin, il existe une troisième catégorie de procédés d'encapsulation basés sur la mise en oeuvre de polymères organiques. Parmi eux, on distingue les méthodes de coacervation : elles reposent sur l'enrobage d'une émulsion de principes actifs par un film polymère précipité. La précipitation est réalisée à partir d'une solution colloïdale de polymère, qui a été volontairement déstabilisée. Le précipité, appelé coacervat, va s'adsorber sur les gouttelettes de l'émulsion contenant les molécules à enrober. A cet effet, le document US 4 376 113 décrit une méthode pour encapsuler un principe actif (les insecticides, herbicides, biocides, fongicides, et les acaricides sont revendiqués) par coacervation et microencapsulation, au moyen d'hydroxyéthylcellulose hydrosoluble.

Cependant, les procédés de coacervation nécessitent la fabrication préalable d'une émulsion des principes actifs à encapsuler, ce qui constitue une étape en plus de celle de coacervation. D'autre part, cette technique ne permet pas l'encapsulation de principes actifs hydrosolubles, puisqu'on ne peut pas réaliser leur mise en émulsion. En outre, cette méthode repose sur la compatibilité des principes actifs avec les polymères utilisés pour la coacervation, ce qui ne la rend pas "universelle".

Une autre méthode d'encapsulation basée sur la mise en oeuvre de polymères est la polycondensation. Cette méthode repose sur la polycondensation de 2 monomères, l'un étant compatible avec le milieu d'encapsulation, l'autre étant compatible avec la substance à encapsuler. Cette technique est décrite dans le document "Microencapsulation of pesticides by interfacial polymerization utilizing isocyanate or aminoplast chemistry" (Pesticide Science, décembre 1998. vol. 54, n°4, pp. 394-400) qui démontre comment on parvient ainsi à éviter la dégradation oxydative de pesticides, tout en contrôlant leur cinétique d'évaporation. Parallèlement, le document EP 0 148 149 décrit un procédé d'encapsulation d'un herbicide par polycondensation interfaciale, les capsules formées étant préférentiellement obtenues par réaction entre un diisocyanate et une amine. Ce procédé est donc limité aux principes actifs qui ne réagissent pas chimiquement avec les isocyanates : on ne peut donc pas encapsuler des amines ou des acides qui sont pourtant des catégories de molécules importantes notamment au niveau des engrais.

La demande de brevet EP 1 655 351 décrit des compositions aqueuses comprenant un composé peu soluble dans l'eau et des émulsions alcali solubles de type ASE ou HASE.

Néanmoins cette demande ne décrit pas qu'en ajustant le pH lors de la préparation de la composition aqueuse il est possible d'encapsuler le composé dans une enveloppe de polymère.
La demande de brevet JP 2005/298474 décrit des compositions cosmétiques comprenant une émulsion de type HASE. Cette demande ne décrit pas l'encapsulation d'un principe actif agrochimique.

Aussi, en vue de résoudre les problèmes multiples :
- d'encapsuler un principe actif agrochimique hydrophobe, de manière à le protéger efficacement des agressions extérieures, tout en protégeant la personne amenée à le manipuler,
- de ralentir sa cinétique de libération ou de diffusion hors de la capsule, en vue d'éviter un surdosage de principe actif ou la multiplication des opérations d'épandage,
- de permettre de formuler ce principe actif à la fois sous forme de liquide ou de solide,
- de fournir un moyen universel permettant d'encapsuler n'importe quel principe actif hydrophobe, tout en satisfaisant les exigences précédentes et ce, tout en palliant les inconvénients de l'art antérieur,

La Demanderesse a mis au point un procédé de fabrication original, caractérisé en ce qu'il comprend les étapes de :
a) mélanger au moins une émulsion de type HASE, au moins un principe actif agrochimique hydrophobe, au moins une base minérale ou organique et de l'eau, ledit mélange ayant un pH supérieur à 5, préférentiellement 6, très préférentiellement 7,
b) précipiter le mélange obtenu après l'étape a) par ajustement du pH à une valeur inférieure à 6, préférentiellement 3, en vue d'obtenir une dispersion dans l'eau de particules solides,
c) éventuellement isoler les particules solides obtenues après l'étape b) par élimination de l'eau.

Une des originalités du procédé selon l'invention est d'utiliser des émulsions de type HASE, qui disposent d'un monomère hydrophobe associatif. Ce monomère possède la propriété, lorsque l'émulsion est neutralisée à pH suffisamment élevé (> 5), de créer des interactions associatives qui renforcent l'effet épaississant par rapport à un polymère ne disposant pas de tels monomères. Ces interactions associatives entre les groupements hydrophobes délimitent des domaines qui sont autant de cages de solvatation pour un principe actif. Un des mérites de la Demanderesse est d'avoir su identifier et utiliser le phénomène de structuration de l'eau via une émulsion de type HASE, à pH supérieur à 5 : on protège ainsi naturellement les principes actifs dissous dans cette solution.
Une telle mise en oeuvre des émulsions de type HASE est dans l'état de nos connaissances actuelles une utilisation nouvelle de ces objets largement décrits dans des applications pour la peinture (voir les documents FR 2 693 203, FR 2 872 815, FR 2 633 930), le domaine des cosmétiques (voir le document FR 2 872 815) ou encore le secteur des bétons (voir la demande de brevet française non encore publiée et portant le numéro de dépôt FR 07 00086). En outre, ces domaines techniques sont très éloignés de celui relatif à la présente invention, et les documents précités ne divulguent ni n'enseignent rien qui aurait pu orienter l'homme du métier vers la présente invention.

Par conséquent, Lorsqu'on ne met en oeuvre que l'étape a) du procédé selon l'invention, on obtient un mélange dans lequel les molécules de principe actif hydrophobe sont piégées dans des cages de solvatation. On ralentit ainsi la vitesse de libération du principe actif, à travers les cages de solvatation constituées par les agrégats hydrophobes des émulsions de type HASE totalement ou partiellement neutralisées.

Dans une première variante du procédé de l'invention, on peut aussi mettre en oeuvre une étape b) d'acidification du mélange obtenu après l'étape a). Comme déjà indiqué, on obtient alors une dispersion dans l'eau de particules solides constituées du polymère de type HASE et des principes actifs.

Dans une deuxième variante, on peut mettre en oeuvre à la fois l'étape b) mais aussi une étape consécutive c), qui consiste en l'isolation des particules solides obtenues après l'étape b), par élimination de l'eau. Comme dans le cas précédent, les principes actifs sont isolés et donc protégés tout en étant libérés plus lentement.

Aussi, un autre avantage du procédé selon la présente invention est de délivrer un principe actif sous une forme qui le protège et ralentit sa libération, cette forme pouvant être double :
- celle d'un liquide qui est une dispersion dans l'eau de particules solides, lorsque la préparation du produit met aussi en oeuvre l'étape de précipitation à un pH inférieur à 5,
- celle d'un solide constitué des particules solides du principe actif qui a été piégé dans les particules de polymères, lorsqu'on a mis en oeuvre l'étape d'isolation du procédé selon l'invention.

La Demanderesse indique que l'unité d'invention est assurée notamment entre ces 2 formes de réalisation de l'invention de part la mise en oeuvre dans chacune de ces formes de la combinaison :
- d'au moins un copolymère de l'acide (méth)acrylique, d'un monomère ester de ces acides, et d'un monomère hydrophobe,
- et d'au moins un principe actif agrochimique.

Enfin, un autre avantage de l'invention est qu'elle peut être mise en oeuvre pour piéger un très grand nombre de principes actifs agrochimiques. En effet, l'homme du métier a accès à une très vaste bibliothèque de monomères associatifs : il peut aisément puiser dans celle-ci en vue d'effectuer le choix judicieux du monomère qui présentera la meilleure affinité possible vis-à-vis du principe actif à piéger.

### Description de l'invention :

Un premier objet de l'invention est un procédé de fabrication d'une formulation contenant au moins un principe actif agrochimique hydrophobe, et caractérisé en ce qu'il comprend les étapes de :
a) mélanger au moins une émulsion de type HASE, au moins un principe actif agrochimique hydrophobe, au moins une base minérale ou organique et de l'eau, ledit mélange ayant un pH supérieur à 5, préférentiellement 6, très préférentiellement 7,
b) précipiter le mélange obtenu après l'étape a) par ajustement du pH à une valeur inférieure à 5, préférentiellement 3, en vue d'obtenir une dispersion dans l'eau de particules solides,
c) éventuellement isoler les particules solides obtenues après l'étape b) par élimination de l'eau.

Dans une première variante, le procédé selon l'invention met en oeuvre l'étape a) puis l'étape b).

Dans une deuxième variante, le procédé selon l'invention met en oeuvre l'étape a) puis l'étape b) puis l'étape c).

Pratiquement, au cours de l'étape a), les constituants (principe actif hydrophobe, eau, émulsion de type HASE, ainsi que la base minérale ou organique) sont introduits sous agitation dans un réacteur ; l'ordre d'introduction sera choisi par l'homme du métier, notamment en fonction de la solubilité dans l'eau du principe actif à encapsuler. La quantité de base minérale ou organique est évidemment ajustée de telle manière à obtenir un pH ayant une valeur supérieure à 5, préférentiellement 6, très préférentiellement 7. La Demanderesse indique que la mise en oeuvre de ladite base peut éventuellement être suivie dans cette étape a) par l'introduction d'un acide, de manière à faire redescendre le pH (tout en le maintenant à une valeur supérieure à 5). L'homme du métier régule ainsi la rhéologie de sa formulation et l'adapte à son application (l'effet épaississant des polymères HASE étant en effet conditionné par le pH du milieu), selon qu'il désire un produit plus ou moins visqueux.

Le procédé selon l'invention est aussi caractérisé en ce qu'on met en oeuvre, dans l'étape a), de 0,1 % à 20 %, préférentiellement de 0,1 % à 10 %, très préférentiellement de 0,1 % à 5 % en poids sec d'une émulsion de type HASE, par rapport au poids total de la formulation aqueuse obtenue après l'étape a).

Le procédé selon l'invention est aussi caractérisé en ce qu'on met en oeuvre, dans l'étape a), de 0,1 % à 20 % en poids sec d'un principe actif agrochimique, par rapport au poids total de la formulation aqueuse obtenue après l'étape a).

Le procédé selon l'invention est aussi caractérisé en ce qu'on met en oeuvre un acide moyennement fort ou fort au cours de l'étape b). Cet ajout d'un acide se distingue ici de l'ajout éventuel d'acide pendant l'étape a) :
- pendant l'étape a), l'acide éventuellement ajouté permet de réguler la viscosité de la formulation tout en maintenant le pH supérieur à 5,
- pendant l'étape b), l'acide ajouté permet de réaliser la précipitation des polymères de type HASE et ce, à une valeur de pH inférieure à 5.

Le procédé selon l'invention est aussi caractérisé en ce que l'émulsion de type HASE contient au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

Le procédé selon l'invention est aussi caractérisé en ce que ledit monomère contenant au moins un groupement hydrophobe possède la formule générale (I) : 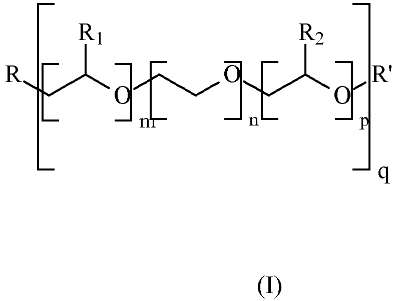 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

Le procédé selon l'invention est aussi caractérisé en ce que l'eau est éliminée par évaporation ou centrifugation au cours de l'étape c). Toutefois, l'homme du métier pourra mettre en oeuvre toute autre technique visant à éliminer l'eau du mélange obtenu après l'étape b).
Le procédé est enfin caractérisé en ce que le principe actif agrochimique est hydrophobe.

L'invention décrit la formulation aqueuse contenant au moins
un principe actif agrochimique hydrophobe, et obtenue par la mise en oeuvre de l'étape a) du procédé précédemment décrit.

Cette formulation aqueuse contenant au moins un principe actif agrochimique hydrophobe est caractérisée :
1. en ce qu'elle contient de l'eau, au moins une émulsion de type HASE, au moins une base minérale ou organique et au moins un principe actif agrochimique,
2. et en ce qu'elle possède un pH supérieur à 5, préférentiellement 6, très préférentiellement 7.

Cette formulation aqueuse est aussi caractérisée en ce qu'elle contient de 0,1 % à 20 %, préférentiellement de 0,1 % à 10 %, très préférentiellement de 0,1 % à 5 % en poids sec d'au moins une émulsion de type HASE, par rapport à son poids total.

Cette formulation aqueuse est aussi caractérisée en ce qu'elle contient de 0,1 % à 20 % en poids sec d'au moins un principe actif agrochimique qui hydrophobe, par rapport à son poids total.

Cette formulation aqueuse est aussi caractérisée en ce que l'émulsion de type HASE contient au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

Cette formulation aqueuse est aussi caractérisée en ce que ledit monomère contenant au moins un groupement hydrophobe possède la formule générale (I) : 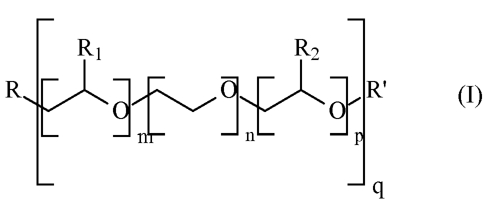 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

Un autre objet de l'invention consiste en la formulation constituée de particules solides en dispersion dans l'eau, et obtenue par mise en oeuvre de l'étape de précipitation b) du procédé auparavant décrit.

Cette dispersion de particules solides dans l'eau est caractérisée en ce que les particules solides qui la constituent, contiennent au moins un principe actif agrochimique hydrophobe et au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

Cette dispersion de particules solides dans l'eau est aussi caractérisée en ce que ledit monomère contenant au moins un groupement hydrophobe possède la formule générale (I) : 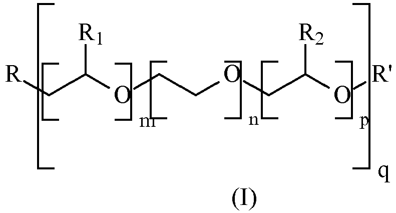 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

Un autre objet de l'invention réside dans la formulation constituée des particules solides obtenues par mise en oeuvre de l'étape d'isolation c) du procédé auparavant décrit.

Ces particules solides sont caractérisées en ce qu'elles contiennent au moins un principe actif agrochimique hydrophobe et au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

Ces particules solides sont aussi caractérisées en ce que ledit monomère contenant au moins un groupement hydrophobe possède la formule générale (I) : 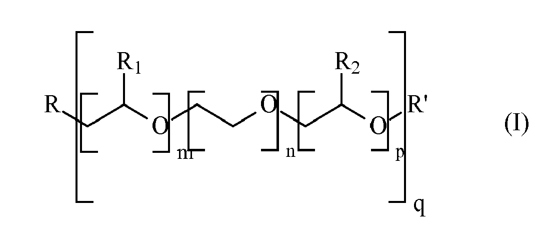 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

Un dernier objet de l'invention est l'utilisation des dispersions aqueuses de particules solides d'au moins un principe actif agrochimique hydrophobe et des particules solides d'au moins un principe actif agrochimique hydrophobe, comme agent ayant la triple fonction de protéger un principe actif agrochimique des agressions extérieures, de ralentir sa libération, et de protéger les personnes qui le manipulent.

### EXEMPLES

### Exemple 1

Cet exemple illustre le procédé selon l'invention, dans lequel on réalise tout d'abord selon l'étape a) une formulation aqueuse d'un principe actif agrochimique qui est la bouillie bordelaise (fongicide polyvalent à base de cuivre), en présence d'une émulsion de type HASE, et à un pH supérieur à 5. La bouillie bordelaise est insoluble dans l'eau ; sa couleur bleue caractéristique permettra de reconnaître si elle est encapsulée dans des particules de polymères, ou si elle est libérée dans l'eau.

On fait ensuite précipiter ces formulations selon l'étape b) du procédé de l'invention, par abaissement du pH à une valeur inférieure à 5 : on montre alors comment la bouillie bordelaise se retrouve piégée dans des particules de polymères.

On filtre enfin selon l'étape c) les capsules obtenues précédemment de manière à obtenir des particules solides de polymère ayant encapsulé la bouillie bordelaise.

Cet exemple illustre donc les différents objets de l'invention.

### Essai n° 1

Cet essai est un témoin.

On a introduit 6,99 g de bouillie bordelaise dans 353,01 g d'eau bi permutée. On vérifie bien que la bouillie bordelaise n'est pas soluble dans l'eau, et décante très rapidement. Ce mélange est aujourd'hui utilisé ainsi, ce qui pose notamment le problème d'une grande quantité de principe actif ayant décanté au fond du pot.

### Essai n° 2

Cet essai illustre l'invention.
Selon l'étape a) du procédé de l'invention, on commence par introduire dans un réacteur de 1 litre 66,6 g d'une émulsion de type HASE à 30 % d'extrait sec, et commercialisée par la société COATEX™ sous le nom de DV540. On ajoute ensuite 300 g d'eau bi permutée, puis 7 g de bouillie bordelaise en poudre.
On ajoute ensuite de la soude à 50 % de manière à amener le pH à une valeur de 8,5.

On obtient alors une pâte visqueuse dans laquelle le principe actif est piégé dans les cages de solvatation du polymère de type HASE.
On coule ensuite sur cette pâte (et sous agitation) 80 mL d'une solution d'acide phosphorique à 4 %. Le pH est alors égal à 6,1.
On obtient une formulation bleue, liquide, qui reste stable pendant 3 semaines.

Selon l'étape b) du procédé de l'invention, on prélève 175 grammes de la formulation obtenue précédemment, et on ajoute 50 mL d'une solution d'acide phosphorique à 4 %. On obtient alors 225 grammes d'une formulation à pH 2,6, constituée de capsules de polymères qui présentent une couleur bleue très soutenue : ceci signifie donc que la bouillie bordelaise est bel et bien encapsulée.

Selon l'étape c) du procédé de l'invention, on filtre alors aisément le milieu de manière à obtenir des particules solides.

### Exemple 2

Cet exemple illustre le procédé selon l'invention dans lequel on réalise, selon l'étape a) dudit procédé, une formulation aqueuse d'un principe actif agrochimique qui est la cyperméthrine (n° CAS 52315-07-8) : il s'agit d'une substance active de produit phytosanitaire présentant un effet insecticide, et qui appartient à la famille chimique des pyréthrinoïdes de synthèse.
Sa solubilité dans l'eau est égale à 0,01 mg/L.

On montre ici comment le procédé selon l'invention permet de multiplier par plus de 3 millions la quantité en poids sec de cyperméthrine dissoute dans l'eau (la cyperméthrine étant en fait piégée par les cages de solvatation du polymère).

### Essai n° 3

Cet essai illustre l'invention.
On introduit 0,82 gramme de cyperméthrine dans un réacteur de 0,5 litre puis 182 grammes d'eau bi permutée, puis 16,5 grammes d'une émulsion de type HASE à 30 % d'extrait sec.

Cette émulsion est constituée de, exprimée en pourcentage en poids des monomères par rapport au poids total des monomères :
- 38,2 % d'acide méthacrylique,
- 26,3 % de méthacrylate de méthyle et 26,3 % d'acrylate d'éthyle,
- 9,2 % d'un monomère hydrophobe de formule (I) dans laquelle R est un méthacrylate, R₁ et R₂ désignent le radical méthyle, m+n+p = 25, q=1, R' est un groupement hydrophobe alkyle linéaire ayant 20 atomes de carbone.

Selon l'étape a) du procédé, on neutralise le milieu jusqu'à obtenir un pH égal à 8,6 par addition de soude.
On obtient alors un gel visqueux.
On coule alors 40 grammes d'une solution d'acide phosphorique à 4 %, pour obtenir un pH égal à 5,2.
On obtient alors une solution légèrement trouble : la cyperméthrine a bien été piégée dans les cages de solvatation créées par le polymère de type HASE. On a ainsi piégé 3,4 % en poids de cyperméthrine dans l'eau, alors que la solubilité en l'état de ce produit est extrêmement faible (0,01 mg / L, soit 0,000001 % en poids de matière soluble dans l'eau). On a donc multiplié par plus de 3 millions la solubilité de la cyperméthrine.

### Essai n° 4

Cet essai illustre l'invention.
On introduit 0,82 gramme de cyperméthrine dans un réacteur de 0,5 litre puis 182 grammes d'eau bi permutée, puis 16,5 grammes d'une émulsion de type HASE à 30 % d'extrait sec.

Cette émulsion est constituée de, exprimée en pourcentage en poids des monomères par rapport au poids total des monomères :
- 38,0 % d'acide méthacrylique,
- 53,0 % d'acrylate d'éthyle,
- 9,0 % d'un monomère hydrophobe de formule (I) dans laquelle R est un méthacrylate, R₁ et R₂ désignent le radical méthyle, m+n+p = 25, q=1, R' est un groupement hydrophobe alkyle linéaire ayant 16 atomes de carbone.

Selon l'étape a) du procédé, on neutralise le milieu jusqu'à obtenir un pH égal à 8,5 par addition de soude.

On obtient alors un gel visqueux.

On coule alors 40 grammes d'une solution d'acide phosphorique à 4 %, pour obtenir un pH égal à 5,1.

On obtient alors une solution légèrement trouble : la cyperméthrine a bien été piégée dans les cages de solvatation créées par le polymère de type HASE. De même que précédemment, on a piégé 3,4 % en poids de cyperméthrine dans l'eau, multipliant par plus de 3 millions sa solubilité.

## Revendications

1. Procédé de fabrication d'une formulation contenant au moins un principe actif agrochimique hydrophobe, et **caractérisé en ce qu'**il comprend les étapes de :
a) mélanger au moins une émulsion de type HASE, contenant au moins un copolymère de l'acide (méth)acrylique, d'un monomère non hydrosoluble et d'un monomère contenant au moins un groupement hydrophobe, au moins un principe actif agrochimique hydrophobe, au moins une base minérale ou organique et de l'eau, ledit mélange ayant un pH supérieur à 5, préférentiellement 6, très préférentiellement 7,
b) précipiter le mélange obtenu après l'étape a) par ajustement du pH à une valeur inférieure à 6, préférentiellement 3, en vue d'obtenir une dispersion dans l'eau de particules solides,
c) éventuellement isoler les particules solides obtenues après l'étape b) par élimination de l'eau.

2. Procédé selon la revendication 1, **caractérisé en ce qu'**on met en oeuvre, dans l'étape a) :
de 0,1 % à 20 %, préférentiellement de 0,1 % à 10 %, très préférentiellement de 0,1 % à 5 % en poids sec d'une émulsion de type HASE, par rapport au poids total de la formulation aqueuse obtenue après l'étape a),
et de 0,1 % à 20 % en poids sec d'un principe actif agrochimique, par rapport au poids total de la formulation aqueuse obtenue après l'étape a).

3. Procédé selon l'une des revendications 1 à 2, **caractérisé en ce qu'**on met en oeuvre un acide fort au cours de l'étape b).

4. Procédé selon l'une des revendications 1 à 3, **caractérisé en ce que** dans l'émulsion de type HASE, le monomère non hydrosoluble est un ester (méth)acrylique choisi préférentiellement parmi l'acrylate d'éthyle, l'acrylate de butyle, le méthacrylate de méthyle et leurs mélanges.

5. Procédé selon l'une des revendications 1 à 4, **caractérisé en ce que** ledit monomère contenant au moins un groupement hydrophobe possède la formule générale (I) : 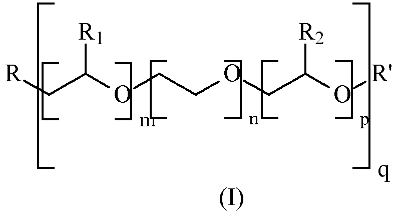 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

6. Formulation constituée de particules solides en dispersion dans l'eau obtenue suite à l'étape b) de précipitation du procédé selon l'une des revendications 1 à 5, **caractérisée en ce que** les particules solides qui la constituent contiennent au moins un principe actif agrochimique hydrophobe et au moins un copolymère de l'acide (méth)acrylique, d'un monomère non hydrosoluble et d'un monomère contenant au moins un groupement hydrophobe.

7. Formulation selon la revendication 6, **caractérisée en ce que** ledit monomère non hydrosoluble est un ester (méth)acrylique choisi préférentiellement parmi l'acrylate d'éthyle, l'acrylate de butyle, le méthacrylate de méthyle et leurs mélanges.

8. Formulation selon la revendication 6, **caractérisée en ce que** ledit monomère contenant au moins un groupement hydrophobe possède la formule générale (I) : 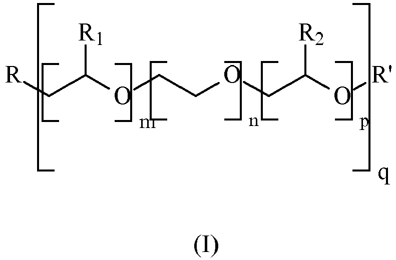 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

9. Particules solides obtenues suite à l'étape c) du procédé selon l'une des revendications 1 à 5, **caractérisées en ce qu'**elles contiennent au moins un principe actif agrochimique hydrophobe et au moins un copolymère de l'acide (méth)acrylique, d'un monomère non hydrosoluble qui est préférentiellement un ester (méth)acrylique choisi très préférentiellement parmi l'acrylate d'éthyle, l'acrylate de butyle, le méthacrylate de méthyle et leurs mélanges, et d'un monomère contenant au moins un groupement hydrophobe.

10. Particules solides selon la revendication 9, **caractérisées en ce que** ledit monomère contenant au moins un groupement hydrophobe possède la formule générale (I) : 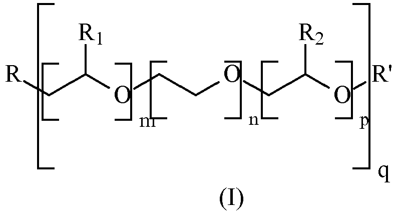 où :
- m, n, p et q sont des entiers et m, n, p sont inférieurs à 150,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6, préférentiellement au moins 10, très préférentiellement au moins 12 atomes de carbone.

11. Utilisation des dispersions aqueuses de particules solides d'au moins un principe actif agrochimique hydrophobe selon l'une des revendications 6 à 8, et des particules solides d'au moins un principe actif agrochimique hydrophobe selon l'une des revendications 9 ou 10, comme agent ayant la triple fonction de protéger un principe actif agrochimique des agressions extérieures, de ralentir sa libération, et de protéger les personnes qui le manipulent.

## Patentansprüche

1. Verfahren zur Herstellung einer Formulierung, welche mindestens einen hydrophoben agrochemischen Wirkstoff enthält, und **dadurch gekennzeichnet, dass** es die Schritte umfasst des:
a) Mischens von mindestens einer Emulsion vom Typ HASE, welche mindestens ein Copolymer der (Meth)acrylsäure, eines nicht wasserlöslichen Monomers und eines mindestens eine hydrophobe Gruppe enthaltenden Monomers enthält, mindestens einem hydrophoben agrochemischen Wirkstoff, mindestens einer anorganischen oder organischen Base und von Wasser, wobei die Mischung einen pH-Wert von größer als 5, vorzugsweise 6, besonders bevorzugt 7 aufweist,
b) Ausfällens der nach dem Schritt a) erhaltenen Mischung durch Einstellen des pH-Werts auf eine Wert von kleiner als 6, vorzugsweise 3, mit dem Ziel, eine Dispersion von festen Teilchen im Wasser zu erhalten,
c) gegebenenfalls Isolierens der nach dem Schritt b) erhaltenen festen Teilchen durch Entfernen des Wassers.

2. Verfahren nach Anspruch 1, **dadurch gekennzeichnet, dass** im Schritt a) eingesetzt werden:
0,1 % bis 20 %, vorzugsweise 0,1 % bis 10 %, besonders bevorzugt 0,1 % bis 5 % Trockengewicht einer Emulsion vom Typ HASE, bezogen auf das Gesamtgewicht der nach dem Schritt a) erhaltenen wässrigen Formulierung,
und 0,1 % bis 20 % Trockengewicht eines agrochemischen Wirkstoffs, bezogen auf das Gesamtgewicht der nach dem Schritt a) erhaltenen wässrigen Formulierung.

3. Verfahren nach einem der Ansprüche 1 bis 2, **dadurch gekennzeichnet, dass** im Lauf des Schritts b) eine starke Säure eingesetzt wird.

4. Verfahren nach einem der Ansprüche 1 bis 3, **dadurch gekennzeichnet, dass** in der Emulsion vom Typ HASE das nicht wasserlösliche Monomer ein (Meth)acrylester ist, vorzugsweise ausgewählt aus Ethylacrylat, Butylacrylat, Methylmethacrylat und deren Mischungen.

5. Verfahren nach einem der Ansprüche 1 bis 4, **dadurch gekennzeichnet, dass** das mindestens eine hydrophobe Gruppe enthaltende Monomer die allgemeine Formel (I) besitzt: 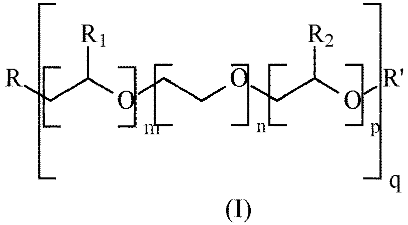 worin:
- m, n, p und q ganze Zahlen sind und m, n, p kleiner als 150 sind,
- R eine polymerisierbare Vinylfunktion umfasst,
- R₁ und R₂ identisch oder verschieden sind und für Wasserstoffatome oder Alkylgruppen stehen,
- R' eine hydrophobe Gruppe ist, die mindestens 6, vorzugsweise mindestens 10, besonders bevorzugt mindestens 12 Kohlenstoffatome umfasst.

6. Formulierung, die aus im Wasser dispergierten festen Teilchen besteht, welche im Anschluss an den Ausfällschritt b) des Verfahrens nach einem der Ansprüche 1 bis 5 erhalten wird, **dadurch gekennzeichnet, dass** die festen Teilchen, aus denen dieselbe besteht, mindestens einen hydrophoben agrochemischen Wirkstoff und mindestens ein Copolymer der (Meth)acrylsäure, eines nicht wasserlöslichen Monomers und eines mindestens eine hydrophobe Gruppe enthaltenden Monomers enthält.

7. Formulierung nach Anspruch 6, **dadurch gekennzeichnet, dass** das nicht wasserlösliche Monomer ein (Meth)acrylester ist, vorzugsweise ausgewählt aus Ethylacrylat, Butylacrylat, Methylmethacrylat und deren Mischungen.

8. Formulierung nach Anspruch 6, **dadurch gekennzeichnet, dass** das mindestens eine hydrophobe Gruppe enthaltende Monomer die allgemeine Formel (I) besitzt: 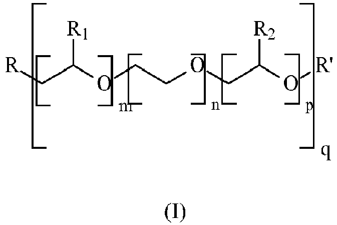 worin:
- m, n, p und q ganze Zahlen sind und m, n, p kleiner als 150 sind,
- R eine polymerisierbare Vinylfunktion umfasst,
- R₁ und R₂ identisch oder verschieden sind und für Wasserstoffatome oder Alkylgruppen stehen,
- R' eine hydrophobe Gruppe ist, die mindestens 6, vorzugsweise mindestens 10, besonders bevorzugt mindestens 12 Kohlenstoffatome umfasst.

9. Feste Teilchen, die im Anschluss an den Schritt c) des Verfahrens nach einem der Ansprüche 1 bis 5 erhalten werden, **dadurch gekennzeichnet, dass** sie mindestens einen hydrophoben agrochemischen Wirkstoff und mindestens ein Copolymer der (Meth)acrylsäure, eines nicht wasserlöslichen Monomers, welches vorzugsweise ein (Meth)acrylester ist, besonders bevorzugt ausgewählt aus Ethylacrylat, Butylacrylat, Methylmethacrylat und deren Mischungen, und eines mindestens eine hydrophobe Gruppe enthaltenden Monomers enthalten.

10. Feste Teilchen nach Anspruch 9, **dadurch gekennzeichnet, dass** das mindestens eine hydrophobe Gruppe enthaltende Monomer die allgemeine Formel (I) besitzt: 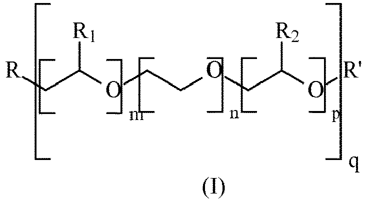 worin:
- m, n, p und q ganze Zahlen sind und m, n, p kleiner als 150 sind,
- R eine polymerisierbare Vinylfunktion umfasst,
- R₁ und R₂ identisch oder verschieden sind und für Wasserstoffatome oder Alkylgruppen stehen,
- R' eine hydrophobe Gruppe ist, die mindestens 6, vorzugsweise mindestens 10, besonders bevorzugt mindestens 12 Kohlenstoffatome umfasst.

11. Verwendung der wässrigen Dispersionen fester Teilchen von mindestens einem hydrophoben agrochemischen Wirkstoff nach einem der Ansprüche 6 bis 8, und der festen Teilchen von mindestens einem hydrophoben agrochemischen Wirkstoff nach einem der Ansprüche 9 oder 10, als Mittel, welches die Dreifachfunktion des Schützens eines agrochemischen Wirkstoffs vor den äußeren Einflüssen, des Verlangsamens seiner Freisetzung, und des Schützens der ihn handhabenden Personen aufweist.

## Claims

1. Method for manufacturing a formulation containing at least one hydrophobic agrochemical active principle, and **characterised in that** it comprises the steps of:
a) mixing at least one emulsion of the HASE type, containing at least one copolymer of (meth)acrylic acid, a water-insoluble monomer and a monomer containing at least one hydrophobic group, at least one hydrophobic agrochemical active principle, at least one mineral or organic base and water, said mixture having a pH greater than 5, preferably 6, very preferably 7,
b) precipitating the mixture obtained after the step a) by adjusting the pH to a value less than 6, preferably 3, in order to obtain a dispersion in water of solid particles,
c) optionally isolating the solid particles obtained after the step b) through elimination of water.

2. Method according to claim 1, **characterised in that** use is made, in step a), of:
from 0.1% to 20%, preferably from 0.1% to 10%, very preferably from 0.1% to 5% in dry weight of an emulsion of the HASE type, with respect to the total weight of the aqueous formulation obtained after step a),
and from 0.1% to 20% in dry weight of an agrochemical active principle, with respect to the total weight of the aqueous formulation obtained after the step a).

3. Method according to one of claims 1 to 2, **characterised in that** use is made of a strong acid during step b).

4. Method according to one of claims 1 to 3, **characterised in that** in the emulsion of the HASE type, the water-insoluble monomer is a (meth)acrylic ester chosen preferably from ethyl acrylate, butyl acrylate, methyl methacrylate and mixtures thereof.

5. Method according to one of claims 1 to 4, **characterised in that** said monomer containing at least one hydrophobic group has the general formula (I): 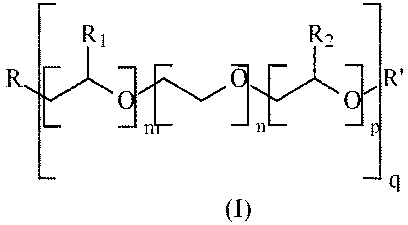 where:
- m, n, p and q are integers and m, n, p are less than 150,
- R comprises a polymerisable vinyl function,
- R₁ and R₂ are identical or different and represent hydrogen atoms or alkyl groups,
- R' is a hydrophobic group comprising at least 6, preferably at least 10, very preferably at least 12 carbon atoms.

6. Formulation comprised of solid particles in dispersion in water obtained following step b) of precipitation of the method according to one of claims 1 to 5, **characterised in that** the solid particles that comprise it contain at least one hydrophobic agrochemical active principle and at least one copolymer of (meth)acrylic acid, a water-insoluble monomer and a monomer containing at least one hydrophobic group.

7. Formulation according to claim 6, **characterised in that** said water-insoluble monomer is a (meth)acrylic ester chosen preferably from ethyl acrylate, butyl acrylate, methyl methacrylate and mixtures thereof.

8. Formulation according to claim 6, **characterised in that** said monomer containing at least one hydrophobic group has the general formula (I): 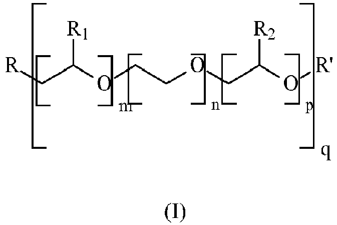 where:
- m, n, p and q are integers and m, n, p are less than 150,
- R comprises a polymerisable vinyl function,
- R₁ and R₂ are identical or different and represent hydrogen atoms or alkyl groups,
- R' is a hydrophobic group comprising at least 6, preferably at least 10, very preferably at least 12 carbon atoms.

9. Solid particles obtained following step c) of the method according to one of claims 1 to 5, **characterised in that** they contain at least one hydrophobic agrochemical active principle and at least one copolymer of (meth)acrylic acid, a water-insoluble monomer which is preferably a (meth)acrylic ester chosen very preferably from ethyl acrylate, butyl acrylate, methyl methacrylate and mixtures thereof, and a monomer containing at least one hydrophobic group.

10. Solid particles according to claim 9, **characterised in that** said monomer containing at least one hydrophobic group has the general formula (I): 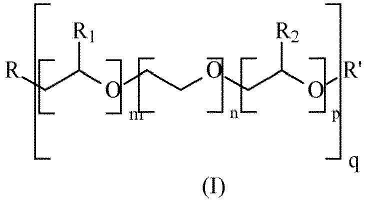 where:
- m, n, p and q are integers and m, n, p are less than 150,
- R comprises a polymerisable vinyl function,
- R₁ and R₂ are identical or different and represent hydrogen atoms or alkyl groups,
- R' is a hydrophobic group comprising at least 6, preferably at least 10, very preferably at least 12 carbon atoms.

11. Use of aqueous dispersions of solid particles of at least one hydrophobic agrochemical active principle according to one of claims 6 to 8, and of solid particles of at least one hydrophobic agrochemical active principle according to one of claims 9 or 10, as an agent having the triple function of protecting an agrochemical active principle from external attacks, slowing the release thereof, and protecting the persons that manipulate it.
